Europäisches Patentamt

European Patent Office

Office européen des brevets

(11) Veröffentlichungsnummer: **0 202 361**
**A2**

# (12) EUROPÄISCHE PATENTANMELDUNG

(21) Anmeldenummer: **85113295.1**

(22) Anmeldetag: **19.10.85**

(51) Int. Cl.⁴: **C 03 C 8/14**

(30) Priorität: **23.05.85 DE 3518523**

(43) Veröffentlichungstag der Anmeldung:
**26.11.86 Patentblatt 86/48**

(84) Benannte Vertragsstaaten:
**DE FR GB IT**

(71) Anmelder: **W.C. Heraeus GmbH**
**Heraeusstrasse 12 - 14**
**D-6450 Hanau / Main(DE)**

(72) Erfinder: **Göbel, Wolfgang**
**Salisweg 57**
**D-6450 Hanau(DE)**

(72) Erfinder: **Landgraf, Günter, Dr. Dipl.-Chem.**
**Helmholtzstrasse 17**
**D-6450 Hanau(DE)**

(72) Erfinder: **Geilenberg, Barbara**
**Königsberger Strasse 6**
**D-6460 Gelnhausen(DE)**

(74) Vertreter: **Heinen, Gerhard, Dr.**
**W.C. Heraeus GmbH Zentralbereich Patente und**
**Lizenzen Heraeusstrasse 12-14**
**D-6450 Hanau(DE)**

(54) Glasschmelzfarben und ihre Verwendung.

(57) Mit Glasschmelzfarben, die neben Bleiborsilicat-Glasflüssen und Farbkörpern thermisch zum Oxid zersetzbare Zirkoniumverbindungen, zum Beispiel Zirkoniumoctoat, enthalten, lassen sich bei relativ niedriger Einbrenntemperatur auf Glas sowohl deckende als auch transparente glänzende, haftfeste Dekorationen mit hoher Spülmaschinenbeständigkeit erzeugen.

W.C. Heraeus GmbH


"Glasschmelzfarben
und ihre Verwendung"


Die Erfindung betrifft Glasschmelzfarben aus Bleiborsilicat-Glasflüssen, Farbkörpern und gegebenenfalls organischen Verarbeitungshilfsmitteln.

Keramische Farben für die Dekoration von Glas bestehen wie die für Porzellan und Keramik aus Farbkörpern beziehungsweise Pigmenten, Glasflüssen oder Glasfritten als Bindemittel und meist auch organischen Verarbeitungshilfsmitteln, sogenannten Anmachmedien, und werden im allgemeinen zwischen 490 und 630 °C eingebrannt (Ullmanns Encyklopädie der technischen Chemie, Band 14, 4. Auflage, 1977, 1 - 12).

Die in Glasschmelzfarben verwendeten Glasflüsse bestehen meist aus Bleiborsilicaten (siehe zum Beispiel DE-PS 1 521 642).

Empfindliche Stielgläser und leicht hitzeverformbare Gläser werden mit Glasschmelzfarben, deren Einbrenntemperatur bei etwa 520 - 570 °C liegt, dekoriert. Um diese Einbrenntemperaturen zu erreichen, müssen Bleiborsilicat-Flüsse mit relativ hohem Gehalt an Blei- und Boroxid verwendet werden. Nachteilig bei solche Flüsse enthaltenden Glasschmelzfarben ist die Anfälligkeit der damit erzeugten Dekorationen gegenüber Säuren und Alkalien.

- 2 -

Glasflüsse mit geringerem Blei- und Boroxid-Gehalt führen
zwar zu widerstandsfähigeren Dekorationen, erhöhen aber die
Einbrenntemperatur der Glasschmelzfarben.

Es ist daher die Aufgabe der Erfindung, Bleiborsilicat-Glasflüsse und Farbkörper enthaltende Glasschmelzfarben zu finden,
die bei relativ niedrigen Temperaturen eingebrannt werden
können und die Dekoration von für den Haushalt bestimmten
Gläsern mit gegen Geschirrspülmittel beständigen Farben ermöglichen.

Die Lösung der Aufgabe stellen erfindungsgemäß Glasschmelzfarben
dieser Art dar, die durch den Zusatz einer oder mehrerer thermisch
zum Oxid zersetzbarer Zirkoniumverbindungen gekennzeichnet
sind.

Besonders bewährt haben sich Glasschmelzfarben, deren Zirkonium-Gehalt
1 - 4 Gewichts-%, berechnet als Zirkoniumdioxid und bezogen
auf den Gehalt an Glasfluß, Farbkörper und Zirkoniumdioxid,
beträgt, und die in organischen Lösungsmitteln (vorzugsweise
aliphatische und aromatische Kohlenwasserstoffe) lösliche,
thermisch zum Oxid zersetzbare Zirkoniumverbindungen, besonders
Zirkoniumresinat, Zirkoniumcarboxylat und/oder Zirkoniumacetylacetonat, enthalten.

Als Zirkoniumcarboxylat - es sollen darunter die Zirkoniumsalze aliphatischer Carbonsäuren mit mehr als 6 C-Atomen
verstanden werden - haben sich Zirkoniumoctoat und Zirkoniumdecanoat besonders bewährt.

Vorzugsweise enthalten die Glasschmelzfarben gemäß der Erfindung
organische Verarbeitungshilfsmittel, wie an sich bekannt,
und werden hauptsächlich direkt im Siebdruckverfahren, durch
Aufspritzen oder Aufpinseln oder über Abziehbilder auf die
zu dekorierenden Gläser aufgebracht.

Alle bekannten für Glasschmelzfarben geeigneten Farbkörper
können für die erfindungsgemäßen Glasschmelzfarben verwendet
werden. Die Glasflüsse sind bekannte Bleiborsilicat-Flüsse,
die Einbrenntemperaturen im Bereich von etwa 520 - 570 °C
erlauben.

Die durch Einbrennen der Glasschmelzfarben gemäß der Erfindung
erzeugten Dekorationen entsprechen hinsichtlich ihres Glanzes
und ihres Farbtons den mit Zirkonium-freien Glasschmelzfarben
erhaltenen. Ihre Beständigkeit ist jedoch - wie Spülmaschinenversuche zeigen - sehr viel besser.

Überraschenderweise sind die Zirkoniumverbindungen auch in
zur Herstellung von transparenten Dekorationen dienenden
Glasschmelzfarben, die Glasflüsse mit hohem, die geringe
Widerstandsfähigkeit der Dekorationen gegen Säuren und Alkalien
verursachendem Bleioxid-Anteil enthalten, wirksam, ohne daß
sie, wenn ihre Menge einem Zirkoniumdioxid-Gehalt von etwa
1 - 4 Gewichts-% entspricht, die Transparenz der gebrannten
transparenten Glasfarbe ungünstig beeinflussen.

Zur näheren Erläuterung werden in den folgenden Beispielen
eine deckende und eine transparente Glasschmelzfarbe gemäß
der Erfindung und - zum Vergleich dazu - entsprechende, jedoch
Zirkonium-freie Glasschmelzfarben beschrieben.

Die Beständigkeit der mit den beschriebenen Glasschmelzfarben
auf Gläsern erzeugten Dekorationen gegenüber im Haushalt
verwendeten Geschirrspülmitteln wird durch Spülmaschinenversuche bestimmt. Bei diesen Versuchen erfolgt der Hauptspülgang bei 60 °C mit 3 g IEC-Reiniger/l enthaltendem
Wasser und einer Spüldauer von 10 Minuten, der Klarspülgang
bei 65 °C mit 0,3 g IEC-Klarspüler/l enthaltendem Wasser
und einer Spüldauer von 5 Minuten. (IEC-Reiniger und IEC-Klarspüler können zum Beispiel von der Firma Henkel KGaA, Düsseldorf, bezogen werden.)

Beispiel 1

Schwarze deckende Glasschmelzfarbe mit einem Zirkonium-Gehalt
von 2,8 Gewichts-%, berechnet als Zirkoniumdioxid und bezogen auf
Glasfluß, Farbkörper und Zirkoniumdioxid

Eine schwarze Glasschmelzfarbe wird durch Vermischen von

a) 70 Gewichts-Teilen einer Mischung aus 90 Gewichts-% eines
   Glasflusses aus

   69 Gewichts-% PbO
    5 "          CdO
   15 "          $B_2O_3$ und
   11 "          $SiO_2$

   und 10 Gewichts-% eines schwarzen Fe-Co-Cr-Farbkörpers,

b) 30 Gewichts-Teilen Terpentinöl und

c) 10 Gewichts-Teilen einer Lösung von Zirkoniumoctoat in
   aromatischen Kohlenwasserstoffen mit einem Zirkonium-Gehalt
   von 15 Gewichts-%

hergestellt, mit dem Pinsel auf das Glas aufgetragen und
bei 560 °C eingebrannt.

Auch noch nach 200 Spülcyclen sind Glanz und Haftfestigkeit der
so erzeugten Dekorationen gut.

Beispiel 2 (Vergleich)

Schwarze deckende Glasschmelzfarbe

Eine schwarze deckende Glasschmelzfarbe wird durch Vermischen von 70 Gewichts-Teilen der in Beispiel 1 beschriebenen Mischung aus Glasfluß und Farbkörper mit 30 Gewichts-Teilen Terpentinöl hergestellt, mit dem Pinsel auf das Glas aufgetragen und bei 560 °C eingebrannt.

Die so erzeugten Dekorationen sind nach 3 Spülcyclen matt und können abgewischt werden.


Beispiel 3

Transparente Glasschmelzfarbe mit einem Zirkonium-Gehalt von 1,6 Gewichts-%, berechnet als Zirkoniumdioxid und bezogen auf Glasfluß, Farbkörper und Zirkoniumdioxid
Eine transparente Glasschmelzfarbe wird durch Vermischen von

a) 65 Gewichts-Teilen einer Mischung aus 96 Gewichts-% eines Glasflusses aus

   78 Gewichts-% PbO
   12 "           $SiO_2$ und
   10 "           $B_2O_3$

   und 4 Gewichts-% Cassius'schem Goldpurpur als Farbkörper,

b) 35 Gewichts-Teilen eines Siebdrucköls aus einer Lösung von 40 Gewichts-% Polybutylmethacrylat in Kohlenwasserstoff-Verdünnungsmittel (Shellsol AB) und

c) 4 Gewichts-Teilen einer Lösung von Zirkoniumdecanoat in aromatischen Kohlenwasserstoffen mit einem Zirkonium-Gehalt von 20 Gewichts-%

hergestellt und zur Erzeugung der Musterschicht von Abziehbildern verwendet. Das mit Hilfe der Abziehbilder auf das
Glas aufgebrachte Muster wird bei 550 °C gebrannt.

Noch nach 100 Spülcyclen sind die so erzeugten Dekorationen
glänzend, transparent und haftfest.

Beispiel 4 (Vergleich)

Transparente Glasschmelzfarbe

Eine transparente Glasschmelzfarbe wird durch Vermischen
von 65 Gewichts-Teilen der in Beispiel 3 beschriebenen Mischung
aus Glasfluß und Cassius'schem Goldpurpur mit 35 Gewichts-Teilen
Siebdrucköl hergestellt und, wie in Beispiel 3 beschrieben,
zur Herstellung von Abziehbildern eingesetzt.

Das mit Hilfe der Abziehbilder auf das Glas aufgebrachte
Muster wird bei 550 °C gebrannt.

Schon nach 4 Spülcyclen haben die so erzeugten Dekorationen
an Glanz und Haftfestigkeit verloren.

Hanau,16. Oktober 1985
ZPL-Pr/gr

W.C. Heraeus GmbH


"Glasschmelzfarben
und ihre Verwendung"


Patentansprüche


1. Glasschmelzfarben aus Bleiborsilicat-Glasflüssen, Farbkörpern und gegebenenfalls organischen Verarbeitungshilfsmitteln, gekennzeichnet durch den Zusatz einer oder mehrerer
thermisch zum Oxid zersetzbarer Zirkoniumverbindungen.

2. Glasschmelzfarben nach Anspruch 1, gekennzeichnet durch
einen Zirkonium-Gehalt von 1 - 4 Gewichts-%, berechnet
als Zirkoniumdioxid und bezogen auf den Gehalt an Glasfluß,
Farbkörper und Zirkoniumdioxid.

3. Glasschmelzfarben nach Anspruch 1 oder 2, dadurch gekennzeichnet, daß die Zirkoniumverbindungen aus Zirkoniumresinat,
Zirkoniumcarboxylat und/oder Zirkoniumacetylacetonat bestehen.

4. Glasschmelzfarben nach Anspruch 3, dadurch gekennzeichnet,
daß das Zirkoniumcarboxylat Zirkoniumoctoat ist.

5. Glasschmelzfarben nach Anspruch 3, dadurch gekennzeichnet,
daß das Zirkoniumcarboxylat Zirkoniumdecanoat ist.

0202361

6. Verwendung von Glasschmelzfarben nach einem der Ansprüche 1 bis 5 für die Muster-Schichten von keramischen Abziehbildern.